# EUROPÄISCHE PATENTSCHRIFT

(11) **EP 1 169 611 B1**
(45) Veröffentlichungstag und Bekanntmachung des Hinweises auf die Patenterteilung: **08.10.2003**
(21) Anmeldenummer: 00920646.7
(22) Anmeldetag: 31.03.2000
(51) Int. Cl.: F26B 3/28, B41F 23/04, B01J 19/12, F21V 29/00

(54) **BESTRAHLUNGSGERÄT**
IRRADIATING DEVICE
APPAREIL D'EXPOSITION A DES RAYONS

(30) Priorität: 13.04.1999 DE 19916474
(43) Veröffentlichungstag der Anmeldung: 09.01.2002
(73) Patentinhaber: IST METZ GmbH, 72622 Nürtingen (DE)
(72) Erfinder: SCHWARZ, Bernd, D-72622 Nürtingen (DE); WEISS, Gustav, D-72657 Altenriet (DE); FUCHS, Günter, D-72644 Oberboihingen (DE); EBINGER, Klaus, D-73257 Köngen (DE); JUNG, Joachim, D-72622 Nürtingen (DE)
(74) Vertreter: Pfiz, Thomas, Dr.
(86) Internationale Anmeldenummer: EP0002916
(87) Internationale Veröffentlichungsnummer: WO00061999

(56) Entgegenhaltungen:
- WO-A-96/28302
- DE-A- 3 305 173
- DE-A- 19 651 977
- US-A- 3 819 929
- US-A- 4 563 589

## Beschreibung

Die Erfindung betrifft ein Bestrahlungsgerät insbesondere zur UV-Bestrahlung von Objekten wie mit einer UV-härtbaren Beschichtung versehenen Substraten, mit einem Gehäuse, einer in dem Gehäuse zwischen einem Reflektor und einer auf das zu bestrahlende Objekt ausrichtbaren Gehäuseöffnung angeordneten, vorzugsweise als röhrenförmige Quecksilberlampe ausgebildeten langgestreckten Strahlungsquelle für ultraviolette und/oder sichtbare elektromagnetische Strahlung und einem Kühlsystem zur Abfuhr der durch die Strahlungsquelle erzeugten Überschußwärme.

Vorrichtungen dieser Art werden zur photochemischen Beeinflussung von Bestrahlungsobjekten in vielfältigen Anwendungen eingesetzt, insbesondere zum Vemetzen bzw. Härten von Beschichtungen, Druckfarben und Lacken auf zumeist flächigen Substraten wie Bedruckstoffen, aber auch zur Beaufschlagung von räumlichen Werkstücken und Formteilen. Vor allem beim Einbau in Druckmaschinen steht häufig nur geringer Bauraum zur Verfügung, und bei schnellem Durchlauf in der Drucklinie bzw. kurzen Taktzeiten muß mit hoher Lampenleistung von bis zu einigen 10 kW pro Geräteeinheit gearbeitet werden. Die somit erforderlichen Kühlsysteme beruhen bisher darauf, daß zumindest ein Teil der überschüssigen Wärme über einen extern erzeugten, linear durch das Gerät hindurchgeleiteten Umgebungsluftstrom abgeführt wird. Neben klimatechnischen Problemen im Arbeitsraum aufgrund des Luftwechsels und der begrenzten Kühllast ergeben sich Schwierigkeiten beim Härten von UV-vemetzbaren Beschichtungsmaterialien, wo Sauerstoff in der Bestrahlungszone zu einer Inhibierung der Radikalkettenpolymerisation führt. In diesem Zusammenhang wurde bereits vorgeschlagen, die Bestrahlungszone am Objekt durch eine UV-lichtdurchlässige Quarzscheibe von dem durch das Aggregat geführten Kühlluftstrom zu trennen und im Objektbereich eine sauerstoffreduzierte Atmosphäre zu erzeugen. Als nachteilig hat sich dabei neben dem erheblichen Bauaufwand herausgestellt, daß an der Quarzscheibe Verschmutzungs- und Absorptionsproblemen auftreten und der Abstand zwischen Strahlungsquelle und Objekt unverhältnismäßig erhöht wird.

Ein bekanntes Bestrahlungsgerät zeigt z.B. das Dokument WO-96/28302.

Ausgehend hiervon liegt der Erfindung die Aufgabe zugrunde, ein Gerät der eingangs genannten Art dahingehend zu verbessern, daß ein einfacher und kompakter Aufbau ermöglicht wird, die Umgebung durch den Betrieb nicht beeinträchtigt wird und vielfältige Einsatzmöglichkeiten insbesondere bei UV-Härtungen eröffnet werden.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, weitgehend autark und modular einsetzbare Einheiten dadurch zu schaffen, daß der Kühlgasstrom innerhalb des Gerätegehäuses erzeugt und geführt wird. Demgemäß wird vorgeschlagen, daß das Kühlsystem einen innerhalb des Gehäuses angeordneten Kühlkreislauf zur Umlaufkühlung der Strahlungsquelle durch einen zwangsgeförderten Kühlgasstrom aufweist. Damit wird ein platzsparender kompakter Aufbau frei von Zu- und Abluftkanälen und ohne Beeinträchtigung der Umgebungsatmosphäre erzielt. Das Gerät kann aufgrund der "Selbstkühlung" auch bei hohen Umgebungstemperaturen betrieben werden, womit sich insbesondere bei der Kombination von IR-Trocknung und UV-Vemetzung Vorteile ergeben. Weiter tritt im wesentlichen kein Gasaustausch zwischen dem Gaskühlkreislauf und der Bestrahlungszone auf, so daß auch weniger Staub aufgewirbelt wird, was bei Naßbeschichtungen oder staubfrei zu haltenden Räumen von Vorteil ist.

Vorteilhafterweise weist der Kühlkreislauf ein in dem Gehäuse angeordnetes Gebläse zur Erzeugung des Kühlgasstromes auf. Dabei kann eine an die Wärmeerzeugung einfach anpaßbare gleichmäßige Kühlung dadurch realisiert werden, daß das Gebläse durch mindestens einen mit seiner Saugseite der Strahlungsquelle längsseitig zugewandten Lüfter gebildet ist. Hinsichtlich eines modularen Geräteaufbaus ist es von Vorteil, wenn das Gebläse durch mehrere über die Länge der Strahlungsquelle verteilt angeordnete Lüfter, vorzugsweise Radiallüfter gebildet ist.

Um die Kühlleistung den Betriebsbedingungen der jeweils ausgeführten Anlage gut anpassen zu können, ist es von Vorteil, wenn die Fördermenge des Gebläses nach Maßgabe des Ausgangssignals eines in dem Gehäuse angeordneten Temperaturfühlers vorzugsweise durch Drehzahlsteuerung der Lüfter selbsttätig einstellbar ist.

Eine optimale, großvolumige Umlaufströmung kann vorteilhaft dadurch erreicht werden, daß der Kühlgasstrom im wesentlichen senkrecht zur Längsrichtung der Strahlungsquelle zirkulierend und über deren Länge sich räumlich erstreckend geführt ist.

Gemäß einer weiteren bevorzugten Ausgestaltung der Erfindung weist der Kühlkreislauf einen durch die Gehäusewandung nach außen begrenzten, von dem Gebläse mit Druck beaufschlagten Mantelraum auf. Durch diese Maßnahme wirken sich eventuelle Undichtigkeiten nicht negativ aus. Eine weitere Verbesserung in dieser Hinsicht kann dadurch erreicht werden, daß der Kühlkreislauf eine saugseitig mit dem Gebläse verbundene Ansaugkammer aufweist, deren Wandung gegenüber der Gehäusewandung einen auf der Druckseite des Gebläses angeordneten Mantelraum als Rückströmkanal für das Kühlgas begrenzt. Damit ist es auch möglich, großflächig laminare Strömungsbedingungen bei der Gasrückführung durch die Bestrahlungszone einzuhalten.

Eine baulich vorteilhafte Ausführung sieht vor, daß die Ansaugkammer durch einen kastenförmigen Gehäuseeinsatz gebildet ist, wobei der Gehäuseeinsatz die Strahlungsquelle längsseitig haubenartig überdeckt und mit einer Durchstrahlöffnung der Gehäuseöffnung zugewandt ist. Dabei ist es für die vorgesehene Strömungsführung günstig, wenn der Gehäuseeinsatz an seiner der Durchstrahlöffnung gegenüberliegenden Stimseite mindestens einen Auslaß zum saugseitigen Anschluß eines vorzugsweise als Radiallüfter ausgebildeten Lüfters aufweist.

Zur geräteintegrierten Rückkühlung des Kühlgasstromes wird vorgeschlagen, daß in dem Kühlkreislauf ein mit Kühlmittel, vorzugsweise Kühlwasser beaufschlagbarer Wärmeaustauscher angeordnet ist. Ein hinsichtlich der Baulänge variabler Geräteaufbau wird dadurch erreicht, daß der Wärmeaustauscher durch mehrere in dem Gehäuse in Längsrichtung der Strahlungsquelle aneinandergesetzte Wärmeaustauschermodule gebildet ist.

Ozon sowie störende, insbesondere vom Objekt abdampfende Fremdsubstanzen lassen sich dadurch eliminieren, daß in dem Kühlkreislauf ein von dem Kühlgasstrom durchströmbares Aktivkohlefilter und gegebenenfalls ein Staubfilter angeordnet ist. Dabei ist es weiter von Vorteil, wenn die Strahlungsquelle, der Reflektor, der Wärmeaustauscher und das Aktivkohlefilter in der Ansaugkammer in Reihe nacheinander durchströmbar angeordnet sind.

Gemäß einer besonders vorteilhaften Ausgestaltung der Erfindung ist es vorgesehen, daß der Kühlkreislauf ein unter den Bestrahlungsbedingungen chemisch reaktionsträges oder reaktionsunfähiges Inertgas als Kühlgas enthält, um so auch bei diffizilen Härtungen optimale Reaktionsbedingungen zu schaffen. Dabei kann der Kühlkreislauf sauerstoffreduzierte Luft oder Stickstoff oder Kohlendioxid als Kühlgas enthalten und vorteilhafterweise über einen in die Ansaugkammer mündenden Gehäuseanschluß mit Kühlgas befüllt werden. Zur Vermeidung von Fremdgaszutritt wird vorgeschlagen, daß das Kühlgas im gesamten Kühlkreislauf unter Überdruck gegen Atmosphäre gehalten ist. Eine weitere Verbesserung wird dadurch erreicht, daß die Bestrahlungszone zwischen dem Rand der Gehäuseöffnung und dem daran vorbeigeführten Objekt durch eine Abschirmvorrichtung gegen Zutritt von Umgebungsluft geschützt ist. Zur Einhaltung vorgegebener Betriebsbedingungen ist ein zur Erfassung des Sauerstoffgehalts des Kühlgasstromes ausgebildeter Sauerstoffsensor vorgesehen, dessen Meßstelle im Bereich der Gehäuseöffnung angeordnet ist.

Gundsätzlich ist es vorstellbar, daß das Gesamtgehäuse aus mehreren gegebenenfalls über Verbindungsleitungen gekoppelten Einzelgehäusen oder Gehäuseteilen besteht, in denen verschiedene Teile des Kühlsystems von der Umgebungsluft getrennt verteilt angeordnet sind. Dabei kann die Verbindungsleitungen durch ein doppelwandiges Verbindungsrohr zur bidirektionalen Kühlgasführung gebildet sein. Im Hinblick auf eventuelle Gaslecks ist es vorteilhaft, wenn der Gasdruck im Mantelraum des Verbindungsrohres höher als in dessen Innenraum ist.

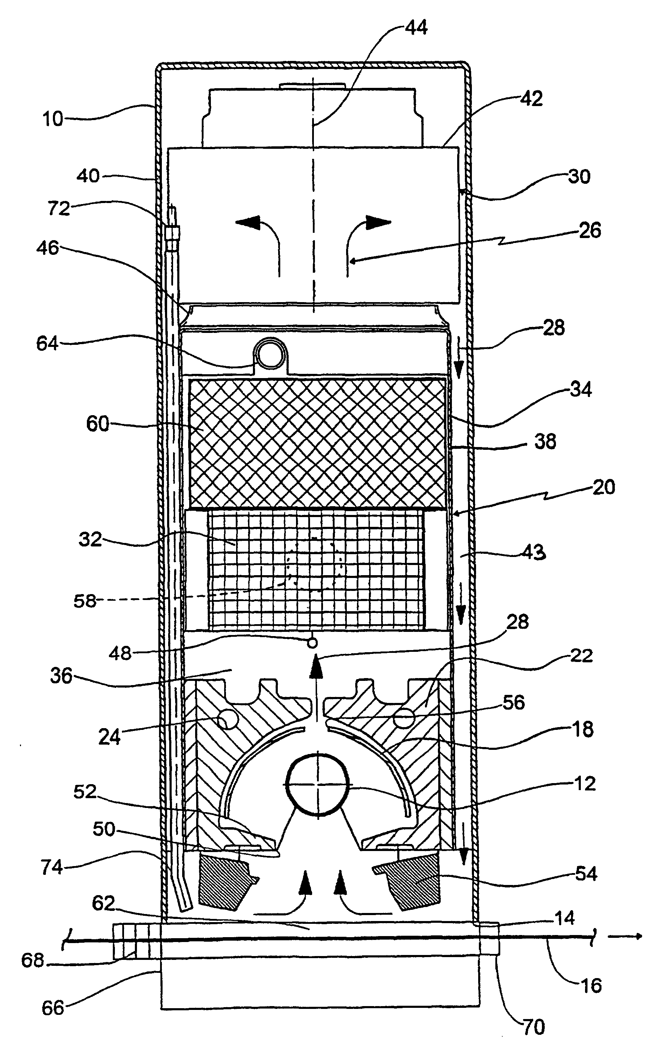

Im folgenden wird die Erfindung anhand eines in der Zeichnung in schematischer Weise dargestellten Ausführungsbeispiels näher erläutert. Die einzige Figur zeigt einen Vertikalschnitt durch ein Bestrahlungsgerät zur UV-Bestrahlung eines in der gezeigten Anwendung bahnförmigen Substrats als Bestrahlungsobjekt.

Das in der Zeichnung dargestellte Bestrahlungsgerät besteht im wesentlichen aus einem Gehäuse 10, einer in dem Gehäuse 10 angeordneten röhrenförmig-langgestreckten Strahlungsquelle 12 zur UV-Bestrahlung des an einer Gehäuseöffnung 14 vorbeigeführten Substrats 16, einem die Strahlungsquelle 12 halbschalig umgebenden Reflektor 18 sowie einem insgesamt mit 20 bezeichneten Kühlsystem zur Abfuhr der in dem Gehäuse durch den Betrieb der Strahlungsquelle anfallenden Überschußwärme.

Die Strahlungsquelle 12 ist durch eine gegebenenfalls mit Metallhalogeniden dotierte Quecksilberdampf-Gasentladungslampe gebildet, in deren Entladungsröhre durch stromstarke Bogenentladung neben UV-Emission und sichtbarem Licht eine erhebliche Menge an IR-Strahlung bzw. Wärme erzeugt wird. Ein Teil davon dringt durch den für IR-Strahlung durchlässigen Reflektor 18 in ein nachgeordnetes, über die Länge der Strahlungsquelle 12 bzw. des Reflektors 18 sich erstreckendes Absorberprofil 22 ein und wird von dort über von einer Kühlflüssigkeit durchströmte Kühlkanäle 24 abgeleitet. Grundsätzlich ist es auch möglich, anstelle eines solchen Kaltlichtspiegels einen wasser- oder luftgekühlten Aluminium-Reflektor mit höherem Wärme-Reflektionswert vorzusehen, um das zu behandelnde Objekt zusätzlich zu erwärmen.

Zur weiteren Wärmeabfuhr weist das Kühlsystem 20 einen innerhalb des Gehäuses 10 angeordneten, insgesamt mit 26 bezeichneten Kühlkreislauf auf, in weichem ein Kühlgasstrom (Strömungspfeile 28) zur Umlaufkühlung der Strahlungsquelle 12 im Gehäuseinneren mittels Gebläse 30 zwangsweise umgewälzt und dabei über einen stromab von der Strahlungsquelle 12 angeordneten Wärmeaustauscher 32 zur Rückkühlung geleitet wird. Zu diesem Zweck ist der Innenraum des rechteckig-kastenförmigen Gehäuses 10 durch einen haubenartigen Gehäuseeinsatz 34 in zwei gegenläufig durchströmbare Strömungsräume unterteilt. Dabei bildet der Innenraum des Gehäuseeinsatzes 34 eine saugseitig mit dem Gebläse 30 verbundene Ansaugkammer 36, während der durch die Wandung 38 des Gehäuseeinsatzes 34 gegenüber der Gehäusewandung 40 begrenzte Mantelraum 43 als Rückströmkanal mit der Druckseite des Gebläses 30 kommuniziert.

Das Gebläse 30 ist durch mehrere über die Länge der Strahlungsquelle 12 bzw. des Gehäuses 10 verteilt angeordnete Radiallüfter 42 gebildet, deren Lüfterachse 44 senkrecht zur Strahlungsquelle 12 ausgerichtet ist und die saugseitig über Ringstutzen 46 auf der Oberseite des Gehäuseeinsatzes 34 mit der Ansaugkammer 36 kommunizieren. Auf diese Weise wird der Kühlgasstrom wie durch die Strömungspfeile 28 dargestellt im wesentlichen senkrecht zur Längsrichtung der Strahlungsquelle 12 zirkulierend über deren Länge gleichmäßig umgewälzt. Im Falle einer Änderung der Lampenleistung (z.B. Stand-By-Betrieb) ist es vorgesehen, die Kühlgas-Fördermenge durch Regelung der Lüfterdrehzahl anzupassen, wobei das Ausgangssignal eines von dem Kühlgas oder der Strahlungsquelle beaufschlagten Temperaturfühlers 48 als Regelgröße auf eine nicht gezeigte Regeleinrichtung übertragen wird.

Einlaßseitig kommuniziert die Ansaugkammer 36 über die der rechteckförmigen Gehäuseöffnung 14 zugewandte Öffnung 50 des Gehäuseeinsatzes 34, welche durch einen als Blende wirkenden Profilteil 52 des Absorberprofils 22 längsseitig begrenzt wird. Um das Substrat 16 gegebenenfalls vor übermäßiger Strahlungsbeaufschlagung schützen zu können, ist eine Verschlußvorrichtung 54 vorgesehen, welche sich vor der Blende 52 schließen läßt.

Das in die Ansaugkammer 36 seitlich von dem Mantelraum 42 her einströmende Kühlgas umspült zunächst den Mantel der Entladungsröhre 12 und strömt dann über einen Längsspalt im Scheitelbereich des Reflektors 18 durch das Absorberprofil 22 hindurch in den Wärmeaustauscher 32 ein, wo es über an Gehäusestutzen 58 eingespeistes Kühlwasser im Querstrom rückgekühlt wird. Stromab von dem Wärmeaustauscher 32 wird das Kühlgas durch ein Aktivkohlefilter 60 von Fremdstoffen, insbesondere von Ozon und substratseitig abdampfenden Substanzen gereinigt, bevor es über das Gebläse 30 und den Mantelraum 42 wieder zurückgeleitet wird. Grundsätzlich ist es auch möglich, den vorstehend beschriebenen Kühlkreislauf in umgekehrter Strömungsrichtung zu betreiben, um gereinigtes Kühlgas durch den Reflektor 56 zum Objekt 16 hin zu leiten und somit ein frühzeitiges Beschlagen der Reflektorfläche zu verhindem.

Ein wichtiger Zusatznutzen des Kühlkreislaufes 26 besteht in der Möglichkeit, gegen strahlungsinduzierte Reaktionen inertes Kühlgas einzusetzen, um dadurch im Bereich des Objekts 16 eine Inertisierung der Bestrahlungszone 62 zu erreichen. Zu diesem Zweck kann der Kühlkreislauf 26 über einen in die Ansaugkammer 36 mündenden Gehäuseanschluß 64 beispielsweise mit Stickstoff als Kühlgas befüllt werden. Durch diese Maßnahme kann der Sauerstoffgehalt im Bereich der Strahlungszone 62 reduziert werden, so daß störende Reaktionen durch Ozon vor allem beim Härten von UV-vemetzbaren Beschichtungen verhindert werden. Um die Bestrahlungszone 62 gegen Sauerstoffzutritt von außen abzuschirmen und übermäßige Kühlgasverluste zu vermeiden, ist eine Abschirmvorrichtung vorgesehen, welche zwischen dem Rand der Gehäuseöffnung 14 und der das Substrat 16 führenden wassergekühlten Gegenblende 66 beispielsweise über eine Einlaufrakel 68 und eine Auslaufschleuse 70 gegenüber dem durchlaufenden Substrat 16 abdichtet. Ein Sauerstoffsensor 72 ermöglicht über ein Schnüffelrohr 74 eine Erfassung des Sauerstoffgehalts im Bereich der Gehäuseöffnung 14.

Aufgrund seines kompakten Aufbaus kann das Bestrahlungsgerät auch unter beengten Einbauverhältnisses vielfältig eingesetzt werden. Es eignet sich zur Bestrahlung und Inertisierung nicht nur von bahnförmigen Substraten, sondern gleichwohl auch von strangförmigen und fadenförmigen Gebilden sowie räumlich geformten Werkstücken.

## Patentansprüche

1. Bestrahlungsgerät insbesondere zur UV-Bestrahlung von Objekten wie mit einer UV-härtbaren Beschichtung versehene Substrate, mit einem Gehäuse (10), einer in dem Gehäuse (10) zwischen einem Reflektor (18) und einer auf das zu bestrahlende Objekt (16) ausrichtbaren Gehäuseöffnung (14) angeordneten, vorzugsweise als röhrenförmige Quecksilberlampe ausgebildeten langgestreckten Strahlungsquelle (12) für ultraviolette und/oder sichtbare elektromagnetische Strahlung und einem Kühlsystem (20) zur Abfuhr der durch die Strahlungsquelle (12) erzeugten Überschußwärme, wobei das Kühlsystem (20) einen innerhalb des Gehäuses (10) angeordneten Kühlkreislauf (26) zur Umlaufkühlung der Strahlungsquelle (12) durch einen Kühlgasstrom (28) aufweist, **dadurch gekennzeichnet, daß** der Kühlkreislauf (26) ein in dem Gehäuse (10) angeordnetes Gebläse (30) zur Erzeugung eines zwangsgeförderten Kühlgasstromes (28) aufweist, und daß der Kühlkreislauf (26) eine saugseitig mit dem Gebläse (30) verbundene Ansaugkammer (36) aufweist, deren Wandung (38) gegenüber der Gehäusewandung (40) einen auf der Druckseite des Gebläses (30) angeordneten Mantelraum (43) als Rückströmkanal für das Kühlgas begrenzt.

2. Bestrahlungsgerät nach Anspruch 1, **dadurch gekennzeichnet, daß** das Gebläse (30) durch mindestens einen mit seiner Saugseite der Strahlungsquelle (12) längsseitig zugewandten Lüfter gebildet ist.

3. Bestrahlungsgerät nach Anspruch 1 oder 2, **dadurch gekennzeichnet, daß** das Gebläse (30) durch mehrere über die Länge der Strahlungs-quelle (12) verteilt angeordnete Lüfter, vorzugsweise Radiallüfter gebil-det ist.

4. Bestrahlungsgerät nach einem der Ansprüche 1 bis 3, **dadurch gekennzeichnet, daß** die Fördermenge des Gebläses (30) nach Maßgabe des Ausgangssignals eines in dem Gehäuse (10) angeordneten Temperaturfühlers (48) vorzugsweise durch Drehzahlsteuerung der Lüfter selbsttätig einstellbar ist.

5. Bestrahlungsgerät nach einem der Ansprüche 1 bis 4, **dadurch gekennzeichnet, daß** der Kühlgasstrom (28) im wesentlichen senkrecht zur Längsrichtung der Strahlungsquelle (12) zirkulierend und über deren Länge sich räumlich erstreckend geführt ist.

6. Bestrahlungsgerät nach einem der Ansprüche 1 bis 5, **dadurch gekennzeichnet, daß** die Ansaugkammer (36) durch einen kastenförmigen Gehäuseeinsatz (34) gebildet ist, wobei der Gehäuseeinsatz (34) die Strahlungsquelle (12) längsseitig haubenartig überdeckt und mit einer Durchstrahlöffnung (50) der Gehäuseöffnung (14) zugewandt ist.

7. Bestrahlungsgerät nach Anspruch 6, **dadurch gekennzeichnet, daß** der Gehäuseeinsatz (34) an seiner der Durchstrahlöffnung (50) gegenüberliegenden Stimseite mindestens einen Auslaß (46) zum saugseitigen Anschluß eines Lüfters, vorzugsweise eines Radiallüfters aufweist.

8. Bestrahlungsgerät nach einem der Ansprüche 1 bis 7, **dadurch gekennzeichnet, daß** in dem Kühlkreislauf (26) ein mit Kühlmittel, vorzugsweise Kühlwasser beaufschlagbarer Wärmeaustauscher (32) zur Rückkühlung des Kühlgasstromes (28) angeordnet ist.

9. Bestrahlungsgerät nach Anspruch 8, **dadurch gekennzeichnet, daß** der Wärmeaustauscher (32) durch mehrere in dem Gehäuse (10) in Langsrichtung der Strahlungsquelle (12) aneinandergesetzte Wärmeaustauschermodule gebildet ist.

10. Bestrahlungsgerät nach einem der Ansprüche 1 bis 9, **dadurch gekennzeichnet, daß** in dem Kühlkreislauf (26) ein von dem Kühlgasstrom (28) durchströmbares Aktivkohlefilter (60) und gegebenenfalls ein Staubfilter angeordnet ist.

11. Bestrahlungsgerät nach Anspruch 10, **dadurch gekennzeichnet, daß** die Strahlungsquelle (12), der Reflektor (18), der Wärmeaustauscher (32), das Aktivkohlefilter (60) und gegebenenfalls das Staubfilter in der Ansaugkammer (36) in Reihe nacheinander durchströmbar angeordnet sind.

12. Bestrahlungsgerät nach einem der Ansprüche 1 bis 11, **dadurch gekennzeichnet, daß** der Kühlkreislauf (26) ein unter den Bestrahlungsbedingungen chemisch reaktionsträges oder reaktionsunfähiges Inertgas als Kühlgas enthält.

13. Bestrahlungsgerät nach einem der Ansprüche 1 bis 12, **dadurch gekennzeichnet, daß** der Kühlkreislauf (26) sauerstoffreduzierte Luft oder Stickstoff oder Kohlendioxid als Kühlgas enthält.

14. Bestrahlungsgerät nach einem der Ansprüche 1 bis 13, **dadurch gekennzeichnet, daß** der Kühlkreislauf (26) über einen in die Ansaugkammer (36) mündenden Gehäuseanschluß (64) mit Kühlgas befüllbar ist.

15. Bestrahlungsgerät nach einem der Ansprüche 1 bis 14, **dadurch gekennzeichnet, daß** das Kühlgas im gesamten Kühlkreislauf (26) unter Überdruck gegen Atmosphäre gehalten ist.

16. Bestrahlungsgerät nach einem der Ansprüche 1 bis 15, **dadurch gekennzeichnet, daß** die Bestrahlungszone (62) zwischen dem Rand der Gehäuseöffnung (14) und dem daran vorbeigeführten Objekt (16) durch eine Abschirmvomchtung (68,70) gegen Zutritt von Umgebungsluft geschützt ist

17. Bestrahlungsgerät nach einem der Ansprüche 1 bis 16, **gekennzeichnet durch** einen zur Erfassung des Sauerstoffgehalts des Kühlgasstromes (28) ausgebildeten Sauerstoffsensor (72), dessen Meßstelle im Bereich der Gehäuseöffnung (14) angeordnet ist.

18. Bestrahlungsgerät nach einem der Ansprüche 1 bis 17, **dadurch gekennzeichnet, daß** das Gehäuse (10) aus mehreren gegebenenfalls über Verbindungsleitungen gekoppelten Einzelgehäusen besteht, in denen verschiedene Teile des Kühlsystems (20) verteilt angeordnet sind.

19. Bestrahlungsgerät nach Anspruch 18, **dadurch gekennzeichnet, daß** die Verbindungsleitungen durch ein doppelwandiges Verbindungsrohr zur bidirektionalen Kühlgasführung gebildet sind.

20. Bestrahlungsgerät nach Anspruch 19, **dadurch gekennzeichnet, daß** der Gasdruck im Mantelraum des Verbindungsrohres höher als in dessen Innenraum ist.

## Claims

1. Irradiation device, particularly for the UV irradiation of objects such as substrates provided with a UV-curable coating, comprising a housing (10), an elongated radiation source (12), preferably in the form of a tubular mercury vapour lamp, disposed in the housing (10) between a reflector (18) and a housing opening (14) which can be aligned with the object (16) to be irradiated, for ultraviolet and/or visible electromagnetic radiation, and a cooling system (20) for dissipating the excess heat generated by the radiation source (12), the cooling system (20) having a cooling circuit (26), disposed within the housing (10), for closed-circuit cooling of the radiation source (12) by a cooling gas flow (28), **characterized in that** the cooling circuit (26) comprises a blower (30), disposed in the housing (10), for generating a forced-delivery cooling gas flow (28), and the cooling circuit (26) comprises an intake chamber (36), connected to the blower (30) on the suction side, whose wall (38) delimits, in relation to the housing wall (40), a circumferential space (43), as a return-flow channel for the cooling gas, disposed on the pressure side of the blower (30).

2. Irradiation device according to claim 1, **characterized in that** the blower (30) is comprised of at least one fan whose suction side faces on its long side towards the radiation source (12).

3. Irradiation device according to claim 1 or 2, **characterized in that** the blower (30) is comprised of a plurality of fans, preferably radial-flow fans, distributed over the length of the radiation source (12).

4. Irradiation device according to one of claims 1 to 3, **characterized in that** the delivery rate of the blower (30) can be automatically adjusted according to the output signal of a temperature sensor (48) disposed in the housing (10), preferably through controlling the rotational speed of the fans.

5. Irradiation device according to one of claims 1 to 4, **characterized in that** the cooling gas flow (28) is routed to circulate substantially perpendicularly relative to the longitudinal direction of the radiation source (12) and to extend three-dimensionally over its length.

6. Irradiation device according to one of claims 1 to 5, **characterized in that** the intake chamber (36) is comprised of a box-shaped housing insert (34), the housing insert (34) covering the radiation source (12) on its long side in the manner of a hood and facing towards the housing opening (14) with a transmission opening (50).

7. Irradiation device according to claim 6, **characterized in that** the housing insert (34) comprises, on its end opposite the transmission opening (50), at least one outlet (46) for the connection of a fan, preferably a radial-flow fan, on the suction side.

8. Irradiation device according to one of claims 1 to 7, **characterized in that**, for the purpose of recooling of the cooling gas flow (28), a heat exchanger (32) to which coolant, preferably cooling water, can be applied, is disposed in the cooling circuit (26).

9. Irradiation device according to claim 8, **characterized in that** the heat exchanger (32) is comprised of a plurality of heat exchanger modules adjoining one another in the housing (10) in the longitudinal direction of the radiation source (12).

10. Irradiation device according to one of claims 1 to 9, **characterized in that** an active carbon filter (60), through which the cooling gas flow (28) can pass, and, if necessary, a dust filter, are disposed in the cooling circuit (26).

11. Irradiation device according to claim 10, **characterized in that** the radiation source (12), the reflector (18), the heat exchanger (32), the active carbon filter (60) and, if applicable, the dust filter are disposed in the intake chamber (36) so that they can be passed through in succession.

12. Irradiation device according to one of claims 1 to 11, **characterized in that** the cooling circuit (26) contains, as a cooling gas, an inert gas which has a low chemical reactivity or is chemically non-reactive under the irradiation conditions.

13. Irradiation device according to one of claims 1 to 12, **characterized in that** the cooling circuit (26) contains, as a cooling gas, oxygen-reduced air or nitrogen or carbon dioxide.

14. Irradiation device according to one of claims 1 to 13, **characterized in that** the cooling circuit (26) can be filled with cooling gas via a housing connection (64). which opens into the intake chamber (36).

15. Irradiation device according to one of claims 1 to 14, **characterized in that** the cooling gas in the entire cooling circuit (26) is kept pressurized above atmosphere.

16. Irradiation device according to one of claims 1 to 15, **characterized in that** the irradiation zone (62) between the edge of the housing opening (14) and the object (16) guided past it is protected by a shielding device (68, 70) against the ingress of ambient air.

17. Irradiation device according to one of claims 1 to 16, **characterized by** an oxygen sensor (72), which is designed to measure the oxygen content of the cooling gas flow (28) and whose measuring point is located in the region of the housing opening (14).

18. Irradiation device according to. one of claims 1 to 17, **characterized in that** the housing (10) consists of a plurality of individual housings coupled together, if necessary, via connecting lines, in which different parts of the cooling system (20) are disposed in a distributed manner.

19. Irradiation device according to claim 18, **characterized in that** the connecting lines are comprised of a double-walled connecting tube for bidirectional routing of the cooling gas.

20. Irradiation device according to claim 19, **characterized in that** the gas pressure in the circumferential space of the connecting tube is higher than in its interior.

## Revendications

1. Appareil d'irradiation, en particulier pour l'irradiation aux UV d'objets comme des substrats dotés d'un enduit durcissable aux UV, avec un boîtier (10), une source de radiations allongée (12) disposée dans le boîtier (10) entre un réflecteur (18) et une ouverture du boîtier (14) pouvant être dirigée sur l'objet à irradier (16), source configurée de préférence comme lampe tubulaire à vapeurs de mercure pour des radiations électromagnétiques ultraviolettes et / ou visibles, et un système de refroidissement (20) pour l'évacuation de la chaleur en excédent produite par la source de radiations (12), dans lequel le système de refroidissement (20) comporte un circuit de refroidissement (26) disposé à l'intérieur du boîtier (10) pour le refroidissement par circulation de la source de radiations (12) par un courant de gaz de refroidissement (28), **caractérisé en ce que** le circuit de refroidissement (26) comporte une soufflante (30) disposée dans le boîtier (10) pour la génération d'un courant ou flux forcé de gaz de refroidissement (28), et **en ce que** le circuit de refroidissement (26) comporte une chambre d'aspiration (36) reliée côté aspiration à la soufflante (30), dont la paroi (38) limite par rapport à la paroi du boîtier (40) un espace périphérique (43) disposé du côté refoulement de la soufflante (30) en tant que conduite de retour pour le gaz de refroidissement.

2. Appareil d'irradiation selon la revendication 1, **caractérisé en ce que** la soufflante (30) est constituée par au moins un ventilateur tourné avec son côté aspiration vers la source de radiations (12), sur son côté longitudinal.

3. Appareil d'irradiation selon la revendication 1 ou 2, **caractérisé en ce que** la soufflante (30) est constituée de plusieurs ventilateurs, de préférence des ventilateurs axiaux, répartis sur la longueur de la source de radiations (12).

4. Appareil d'irradiation selon l'une quelconque des revendications 1 à 3, **caractérisé en ce que** le débit de la soufflante (30) est réglable de façon autonome, de préférence par commande de la vitesse de rotation des ventilateurs, en fonction du signal de sortie d'une sonde de température (48) disposée dans le boîtier (10).

5. Appareil d'irradiation selon l'une quelconque des revendications 1 à 4, **caractérisé en ce que** le courant de gaz de refroidissement (28) est guidé en circulation essentiellement perpendiculairement à la direction longitudinale de la source de radiations (12) et s'étend spatialement sur sa longueur.

6. Appareil d'irradiation selon l'une quelconque des revendications 1 à 5, **caractérisé en ce que** la chambre d'aspiration (36) est formée par un insert de boîtier (34) en forme de caisson, l'insert de boîtier (34) recouvrant la source de radiations (12) sur son côté longitudinal à la manière d'un capot et étant orienté vers l'ouverture du boîtier (14) par une ouverture de passage des radiations (50).

7. Appareil d'irradiation selon la revendication 6, **caractérisé en ce que** l'inser de boîtier (34) comporte à sa face frontale opposée à l'ouverture de passage des radiations (50) au moins une sortie (46) pour le raccordement d'un ventilateur côté aspiration, de préférence d'un ventilateur axial.

8. Appareil d'irradiation selon l'une quelconque des revendications 1 à 7, **caractérisé en ce qu'**un échangeur de chaleur (32) pouvant être alimenté en un réfrigérant, de préférence de l'eau de refroidissement, est disposé dans le circuit de refroidissement (26) pour le refroidissement en retour du courant de gaz de refroidissement (28).

9. Appareil d'irradiation selon la revendication 8, **caractérisé en ce que** l'échangeur de chaleur (32) est constitué de plusieurs modules d'échangeur de chaleur disposés les uns à côté des autres dans le boîtier (10) dans la direction longitudinale de la source de radiations (12).

10. Appareil d'irradiation selon l'une quelconque des revendications 1 à 9, **caractérisé en ce que** dans le circuit de refroidissement (26) sont disposés un filtre à charbon actif (60) pouvant être traversé par le courant de gaz de refroidissement (28) et, le cas échéant, un filtre à poussière.

11. Appareil d'irradiation selon la revendication 10, **caractérisé en ce que** la source de radiations (12), le réflecteur (18), l'échangeur de chaleur (32), le filtre à charbon actif (60) et, le cas échéant, le filtre à poussière, sont disposés en série l'un derrière l'autre dans la chambre d'aspiration (36) et peuvent être traversés par le courant.

12. Appareil d'irradiation selon l'une quelconque des revendications 1 à 11, **caractérisé en ce que** le circuit de refroidissement (26) contient comme gaz de refroidissement un gaz inerte, chimiquement peu réactif ou non réactif sous les conditions de l'irradiation.

13. Appareil d'irradiation selon l'une quelconque des revendications 1 à 12, **caractérisé en ce que** le circuit de refroidissement (26) contient comme gaz de refroidissement de l'air appauvri en oxygène, ou de l'azote, ou du gaz carbonique.

14. Appareil d'irradiation selon l'une quelconque des revendications 1 à 13, **caractérisé en ce que** le circuit de refroidissement (26) peut être rempli en gaz de refroidissement par un raccord de boîtier (64) débouchant dans la chambre d'aspiration (36).

15. Appareil d'irradiation selon l'une quelconque des revendications 1 à 14, **caractérisé en ce que** le gaz de refroidissement est maintenu dans l'ensemble du circuit de refroidissement (26) à une surpression par rapport à l'atmosphère.

16. Appareil d'irradiation selon l'une quelconque des revendications 1 à 15, **caractérisé en ce que** la zone d'irradiation (62) est protégée par un dispositif écran (68, 70) contre l'intrusion d'air ambiant entre le bord de l'ouverture du boîtier (14) et l'objet (16) passé devant.

17. Appareil d'irradiation selon l'une quelconque des revendications 1 à 16, **caractérisé par** un détecteur d'oxygène (72) configuré pour la saisie de la teneur en oxygène du courant de gaz de refroidissement (28) et dont le point de mesure est situé dans la zone de l'ouverture du boîtier (14).

18. Appareil d'irradiation selon l'une quelconque des revendications 1 à 17, **caractérisé en ce que** le boîtier (10) est constitué par plusieurs boîtiers individuels, couplés le cas échéant par des conduites de raccordement, dans lesquels sont disposées et réparties différentes parties du système de refroidissement (20).

19. Appareil d'irradiation selon la revendication 18, **caractérisé en ce que** les conduites de raccordement sont constituées par un tuyau de raccordement à double paroi pour un guidage bidirectionnel du gaz de refroidissement.

20. Appareil d'irradiation selon la revendication 19, **caractérisé en ce que** la pression du gaz dans l'espace périphérique du tuyau de raccordement est plus élevée que dans son espace intérieur.
